# EUROPEAN PATENT APPLICATION

(11) **EP 0 900 607 A1**
(43) Date of publication of application: **10.03.1999**
(21) Application number: 98306115.1
(22) Date of filing: 31.07.1998
(51) Int. Cl.: B22D 11/06, B22D 11/128

(54) **Casting roll**

(30) Priority: 08.08.1997 GB 9716724
(71) Applicant: Kvaerner Metals Continuous Casting Limited, Sheffield S9 4EX (GB)
(72) Inventor: Perry, Robert, Worksop, Nottinghamshire, S80 2QN (GB); Wright, Leslie, Nether Egde, Sheffield, S7 1DN (GB); Reynolds, Timothy, Grindleford, Derbyshire, S30 1JG (GB)
(74) Representative: Harman, Michael Godfrey

(57) **Abstract**

A casting roll 1 for casting molten metal and forming it into a solid continuous strip form comprises a shell 6 coupled to a drive shaft 91. A plurality of shaper units 8, 12 is arranged inside the shell, to allow the shape of the shell to be adjusted. The drive shaft 91 passes through a stationary support shaft 9 of large diameter and is coupled to the shell 6 via epicyclic gearing 92,93,95. The shaper units act between the inside of the shell and the support shaft, which, being massive, acts as the primary structural element to absorb the reaction forces from the shaper units. A further set of shaper units spaced 180° round the shaft may be provided, to enable the shape of the shell to be controlled more accurately.

## Description

The invention relates to casting rolls suitable for casting molten metal and forming the molten metal into a solid continuous strip form. The application of the invention is to rolls suitable for use in a caster comprising two strip casting rolls.

A strip caster typically requires a pair, of rolls with their axis of rotation horizontal and which are spaced apart to provide a gap between them. The rolls may be arranged side by side, with dams provided at the ends of the rolls on their upper side to form a space above the roll gap into which molten metal is poured. Alternatively, the molten metal may be injected through a nozzle into the gap between the rolls, with the nozzle being fed with molten metal from a reservoir located above the rolls so that a sufficient head of pressure is created at the outlet of the nozzle. The nozzle may be directed either horizontally or upwardly, either at an acute angle or vertically, with respect to the roll gap.

The rolls are usually liquid cooled to absorb heat from the molten metal which comes into contact with them, and the molten metal thus forms solidified skins which thicken as the rolls rotate. As the rolls are rotated, they bring the solidified skins of metal together and through the gap between the rolls to form a continuous metal strip.

In an effort to increase casting output, it is desirable to increase the speed of rotation of the rolls, provided sufficient heat can be removed from the rolls.

Care has to be taken that the rolls absorb sufficient heat from the molten metal in contact with them to form two solidified skins whose total thickness equals the thickness of the exiting strip.

A problem with roll casting of this kind is that considerable thermal as well as dynamic stresses are induced in the rolls during casting, in particular thermal stresses as the desired rapid cooling of the molten metal takes place during the casting. This causes deformation of the rolls, which causes the ultimate strip dimensions to be variable and may produce surface contour variations which are preferably avoided.

To overcome this, it has been proposed to use shape controlled rolls. A shape controlled roll comprises a set of shaping units surrounded by a thin rotatable shell. The shaping units are hydraulically controlled and are operated to push against the inside of the shell to expand it. By using a line of shaping units, the profile of the shell can be adjusted as desired. A line of sensors across the emergent cast strip monitors the thickness of the strip (or the tension in the strip) across its width and controls the shaping units appropriately. The shaping units are mounted on a fixed shaping unit support extending inside the shell, which is driven by a drive shat. One or both rolls may be provided with shaper units. The rolls may be backed up by back-up rolls, located outside the main rolls, which provide additional support for the rolls. Also, work rolls may be provided between the two main rolls, with the molten metal passing between the work rolls and the main rolls determining the effective profiles of and/or pressures on the work rolls.

The shell deforming elements may alternatively be supported directly by the main shaft which may comprise a shaped portion, shaped in the region of the shell deforming elements. The shaped portion may comprises a recess in which the shell deforming elements are located.

According to the invention there is provided a casting roll comprising a shell coupled to a drive shaft and having a plurality of shaper units inside the shell, characterized in that the shaper units are mounted on a stationary support shaft of large diameter.

The stationary support shaft may have an axial bore therethrough, and in that the drive shaft passes through the bore in the support shaft and is coupled to the shell by epicyclic gearing.

Alternatively the shell may be driven on the shell by external drive means.

In a further alternative the shell may driven by a motor arranged internally of the shell.

The shaper units may be supported or retained by shaper unit support elements located between the shell and the support shaft, or may be mounted directly on the support shaft.

A number of rolls embodying the invention will now be described in more detail, by way of example, with reference the following drawings, in which:
Figs. 1a to 1c are schematic views of injecting the molten metal into the roll gap of a caster through a nozzle horizontally, at an angle upwardly, and vertically upwardly;
Fig. 2 is a schematic view of the gravitational feeding of the molten metal into the roll gap from a pool above;
Figs. 3 to 7, 9, 11 to 15 are longitudinal sections of complete rolls; and
Figs. 8 and 10 are cross sections through pairs of rolls in the casting position.
Figs. 16 to 18 are cross sectional views of pairs of rolls showing cooling arrangements.

The same numerical identifiers will be used for corresponding parts in the various embodiments.

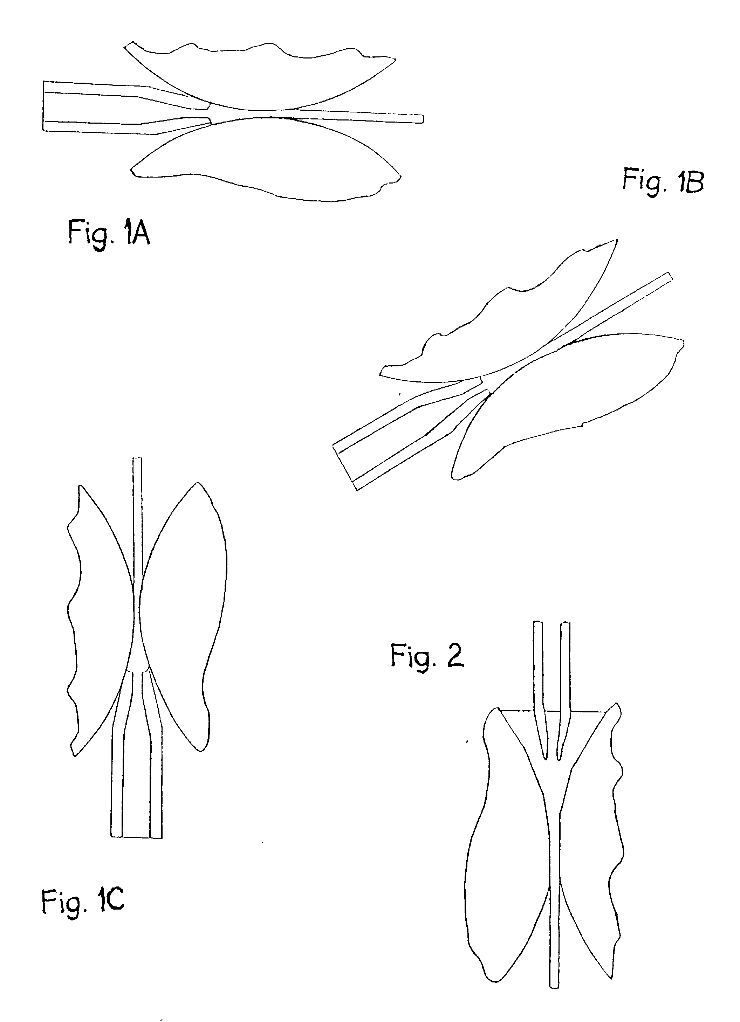

Figs. 1a to 1c show a method of continuous casting into a roll by injecting the molten metal into the gap between the casting rolls using a nozzle. The injecting nozzle may be arranged at any convenient angle to the casting rolls so that the metal is cast either horizontally as in Fig. 1a, or upwardly at an angle as in Fig. 1b, or alternatively upwardly vertically as in Fig. 1c. By casting using such an injection nozzle, a convenient width of cast strip may be formed which does not extend the whole width of the casting roll but only in a central region thereof.

Fig. 2 shows another method of continuous casting into a roll, by gravitational feeding of the molten metal into the roll gap from a pool above. This method may require sealing the sides of the rolls to prevent leakage from the pool formed above the rolls.

For both of these methods, the solidification process of the metal from the liquid state to the strip state has to occur over the distance from the first contact with the rolls at the molten side to the last point of contact with rolls on the strip side. Although solidification will not necessarily be complete, the metal has to be solid enough to behave as a strip material so that the desired dimensions of the strip material at the exit of the casting rolls are maintained. Thus a significant task of the casting rolls is to remove as much heat as required from the molten metal so that sufficient solidification can take place and the desired exit through temperature of the strip is achieved. It is also desirable to control the dimensions and flatness of the exiting strip material, and this is a major objective of the present apparatuses.

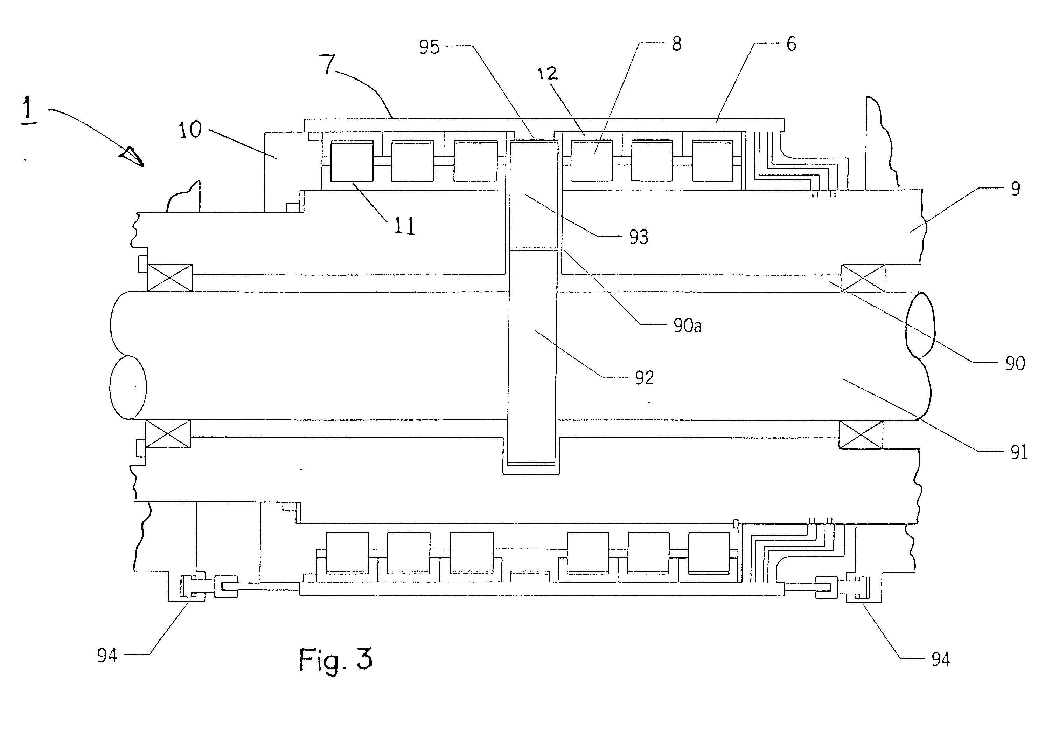

Referring now to Fig. 3, one end of a casting roll is shown; the opposite end of the casting roll is similar. The casting roll 1 comprises a support shaft 9 mounted in a fixed support of a frame of a roll stand. An outer annular casing or shell 6 forms an external cylindrical surface 7 which is in contact with the metal being cast.

The roll 1 includes two rows of shell deforming elements, with each row being split into two half-rows. One row of deforming elements is located beneath the top part of the shell 6, as shown in Fig. 3, and the second row is arranged diametrically opposite, above the bottom part of the shell 6 as shown in the drawing. Each deforming element consists of an actuation pad 12 and a piston 8. The two rows of deforming elements are mounted on a fixed element support member 10 which is in turn mounted on the support shaft 9. The element support member 10 includes recesses 11 in which the pistons 8 are located.

The deforming elements are arranged between the main shaft 9 and the outer shell 6, and each may be operated independently to cause the outer shell 6 to deform. Each element includes an actuation pad 12 acts against the internal surface of the shell 6, and each has its own hydraulic actuating line (not shown), and can be operated to deform the shell 6 in the region immediately above that element concerned, thus producing the desired profile of the outer shell 6.

The reaction force of the shell deforming elements acts directly on the shaper support element 10. However, this bears against the shaft 9 and transmits the reaction force to that shaft, so the reaction force of the shell deforming elements (shaper units) is carried primarily by the support shaft 9.

The deforming elements of the upper row are opposite corresponding elements in the lower row, so that the deformation forces created by one deforming element in one row may be balanced against its corresponding opposing deforming element in the other row. This tends to produce a symmetrical or elliptical deformation of the shell 6.

The outer shell 6 is cooled by internal cooling means which consists of internal channels arranged in the outer shell 6 and which are connected to the coolant supply through the support shaft 9.

The support shaft 9 is hollow and has a drive shaft 91 through its bore 90 which carries a drive means 92 in the central region of the roll to drive the shell 6, entirely separately from the support shaft 9, by co-operating with corresponding drive means on the shell 6. The drive means in this arrangement comprises a central spur gear 92 arranged on the drive shaft 91 which drives an intermediate gear wheel 93 which drives the shell 6 by means of corresponding gear teeth 95 on its underside. The spur gear 92 and gear wheel 93 extend through an opening 90a in the side wall of the main shaft 9.

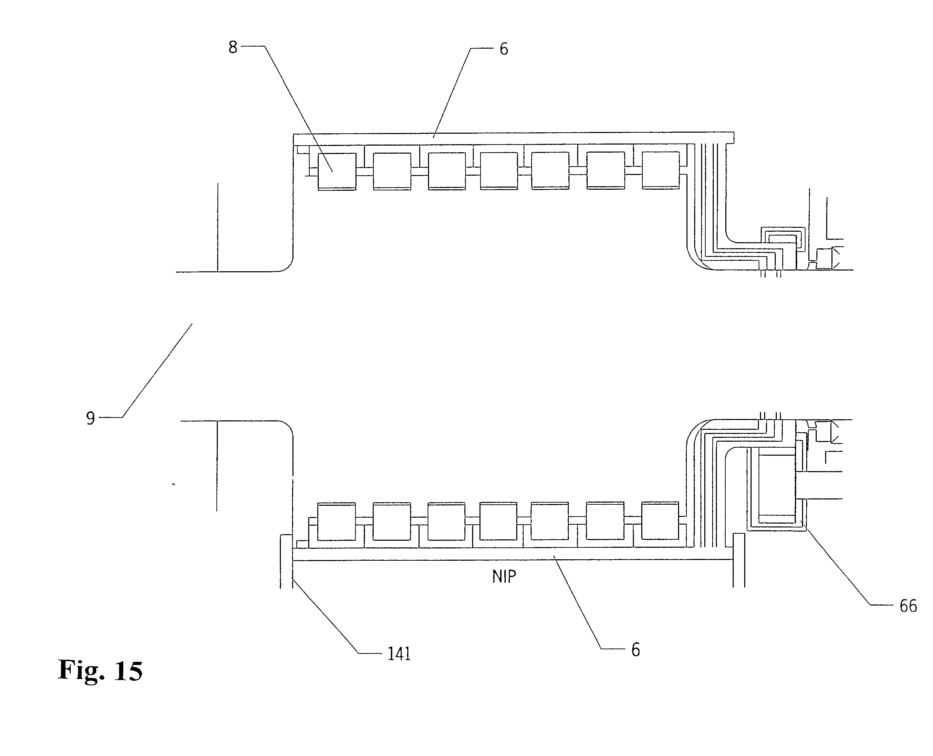

The roll in Fig. 3 also has an axial shell adjustment piston 94 which can be used to align the two roll end faces for use with pool fed casting with end dams as described earlier and as shown in Fig. 2 and Fig. 15. Preferably a pair of axial shell adjustment pistons 94 are provided, one on each end of the shell 6, with each piston being fixed to the frame and being in sliding engagement with the rotating shell 6. Thus each piston is able to provide an axial pushing force only on the shell and working together they are able to control the axial positioning of the shell 6.

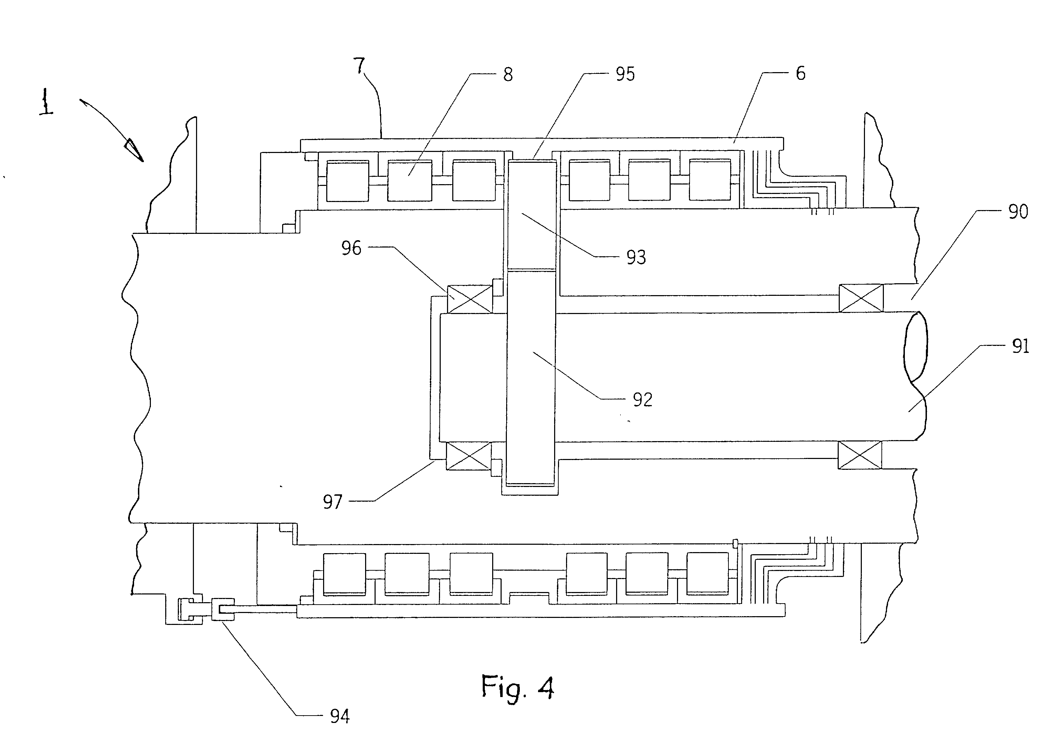

Fig. 4 shows a modification of the roll of Fig. 3 in which the support shaft 9 is continuous through the axis of the roll 1. This shaft is however hollow through its right hand half only and through this bore 90 a cantilever drive shaft 91 is provided, supported from the right hand side only as shown, with a central spur gear 92 arranged on the drive shaft 91 near its free end which drives an intermediate gear wheel 93 which drives the shell 6 by means of corresponding gear teeth 95 on its underside. The free end of the drive shaft 91 is supported by shaft bearings 96 which bear against supports 97 at the closed end of the hollow 90.

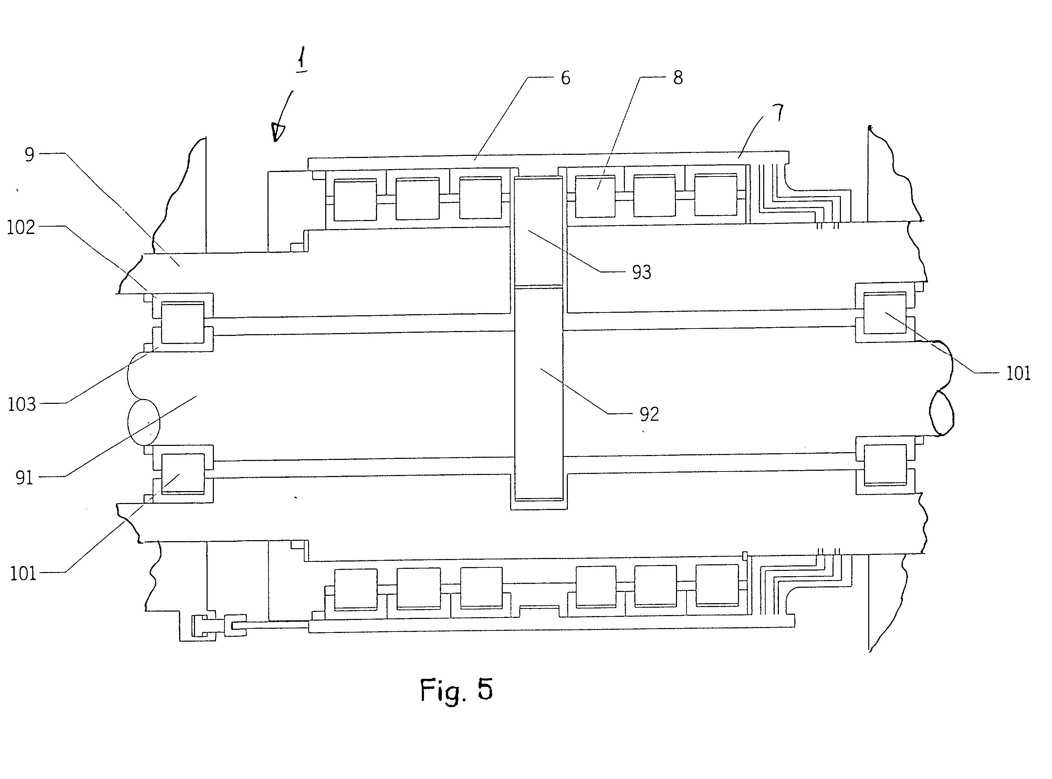

Fig. 5 shows a casting roll which is similar to the roll shown in Fig. 4. The support shaft 9 is static and continuous through the axis of the roll and hollow, with a drive shaft 91 passing through its centre 90 with gear drive means 92, 93 to the outer shell 6. However in this arrangement compensation piston means 101 are provided between the fixed shaft 9 and the drive shaft 91 at each end of the roll 1. The compensation pistons are provided in pairs at each end in order that they can react against each other. Associated with each compensating piston 101 is a corresponding compensating pad 102 and a compensating support 103. These compensation piston means 101 are able to accommodate movement and enable axial adjustment of the shell (6), to, for example, maintain a perfect gear engagement.

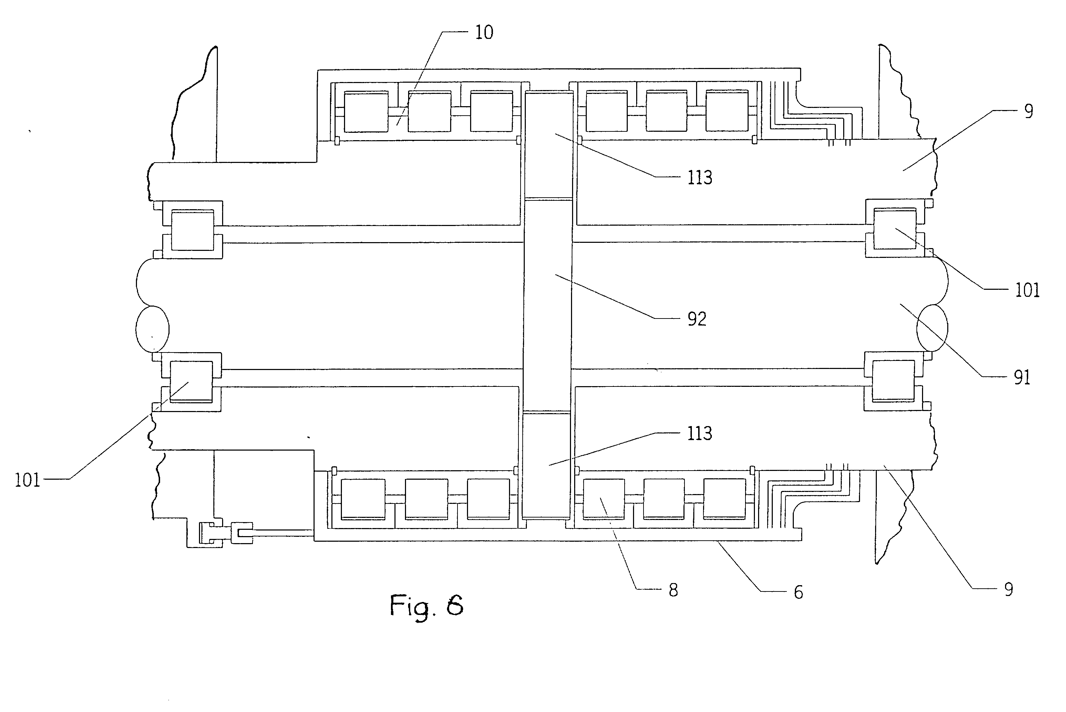

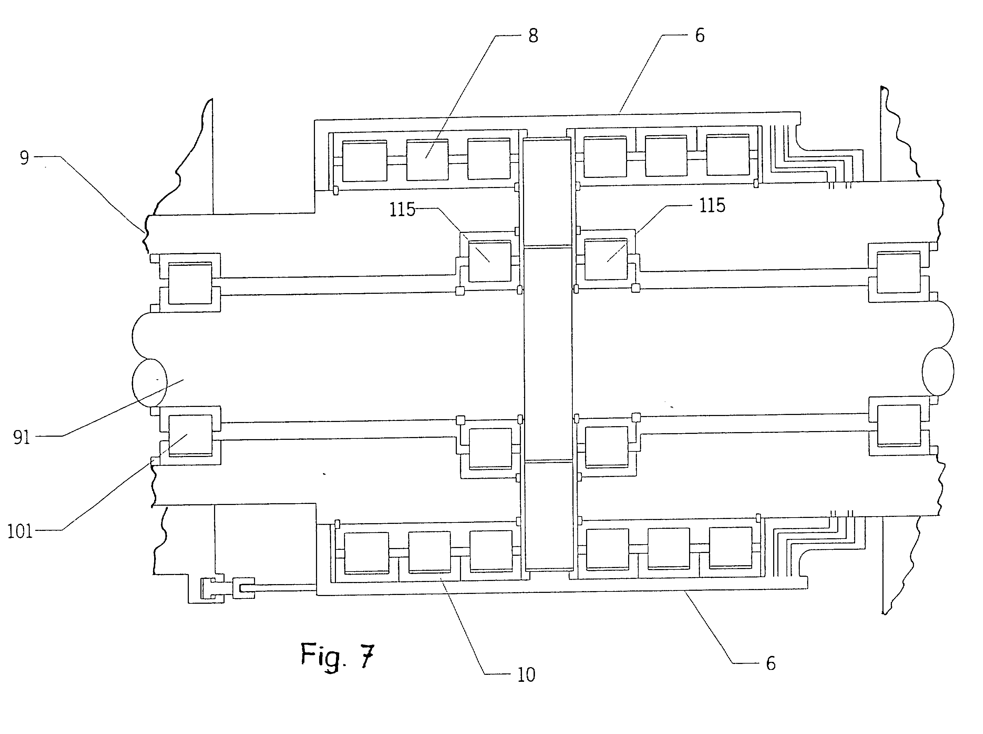

Fig. 6 shows a complete casting roll which is similar to the roll shown in Fig. 5. The support shaft 9 is static and continuous through the axis of the roll and hollow, with a drive shaft 91 passing through its centre 90 with gear drive means 92, 93 to the outer shell 6 and compensating pistons for between the drive shaft 91 and the static shaft 9. In this arrangement the gear drive means between the drive shaft 91 and the shell 6 is an epicyclic or two geared drive 110 comprising opposing intermediate gears wheels 113 on each side of the drive shaft gear 92. Fig. 7 shows the same arrangement with additional shell compensating pistons 115 arranged at the centre of the drive shaft 91 on either side of the drive gear 92.

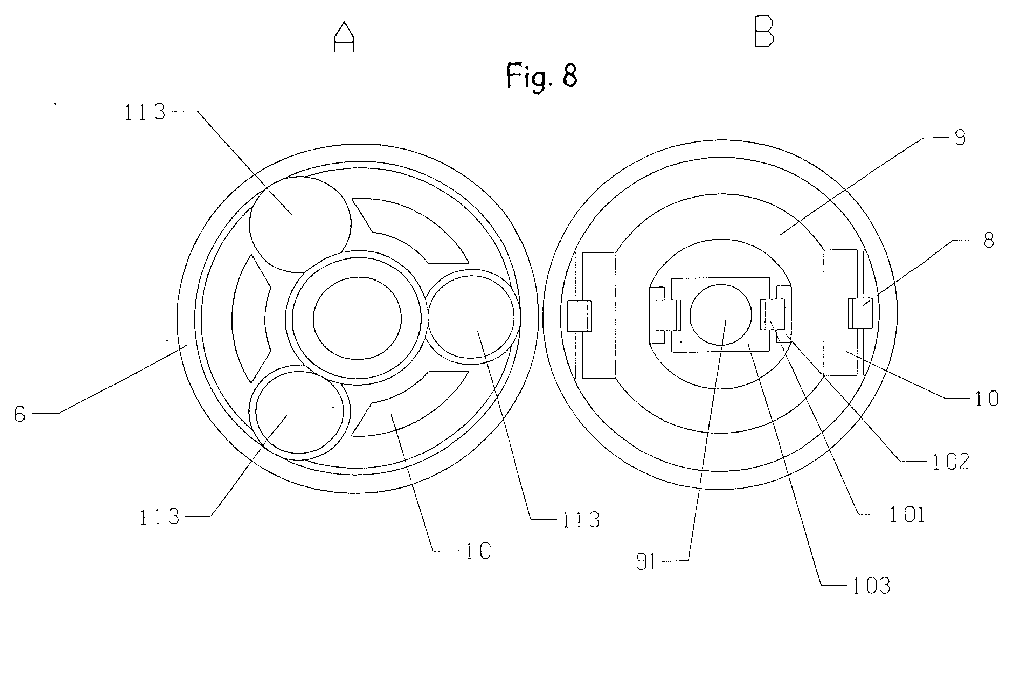

Fig. 8 is a cross sectional view of two rolls arranged together in the working position for the cast metal to pass between them during casting. The rolls are of the general type shown in the longitudinal section of Fig. 3 showing a row of shell deforming elements along the length of the roll and a corresponding opposing set on the opposite side. In an alternative arrangement, a single set on one side only of the roll could be used. In the arrangement shown the shaft is rotating and supported by hydrostatic bearings. Roll A shows a section through the centre of the roll, showing the gearing from the drive shaft to the shell. The outer part of roll B shows a section further along the roll, showing the deforming elements; the inner part shows the inner deforming elements 101 at the ends of the roll.

Roll A shows a 3-gear epicyclic gearing arrangement, with the spur gear 92 and three intermediate gears 113 of the epicyclic drive which drives the shell 6. In this arrangement one of the three intermediate gears 113 is in line with the nip of the two rolls; the nip of the two rolls is the point at which the distance between the external shells of each roll 6 is lowest. Thus the axis of one of the intermediate gears 113 is in the same plane as the plane formed by the axis of the roll and the nip of the rolls. It will be realized, however, that the gears can be arranged so that the nip lies opposite any desired point between adjacent gears.

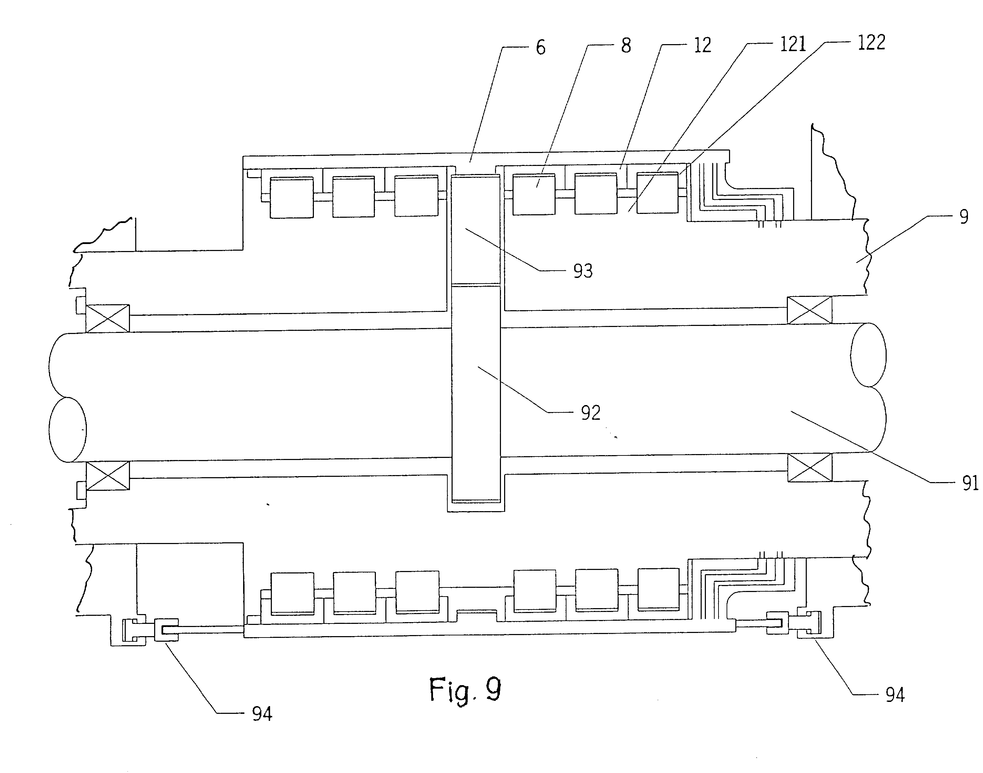

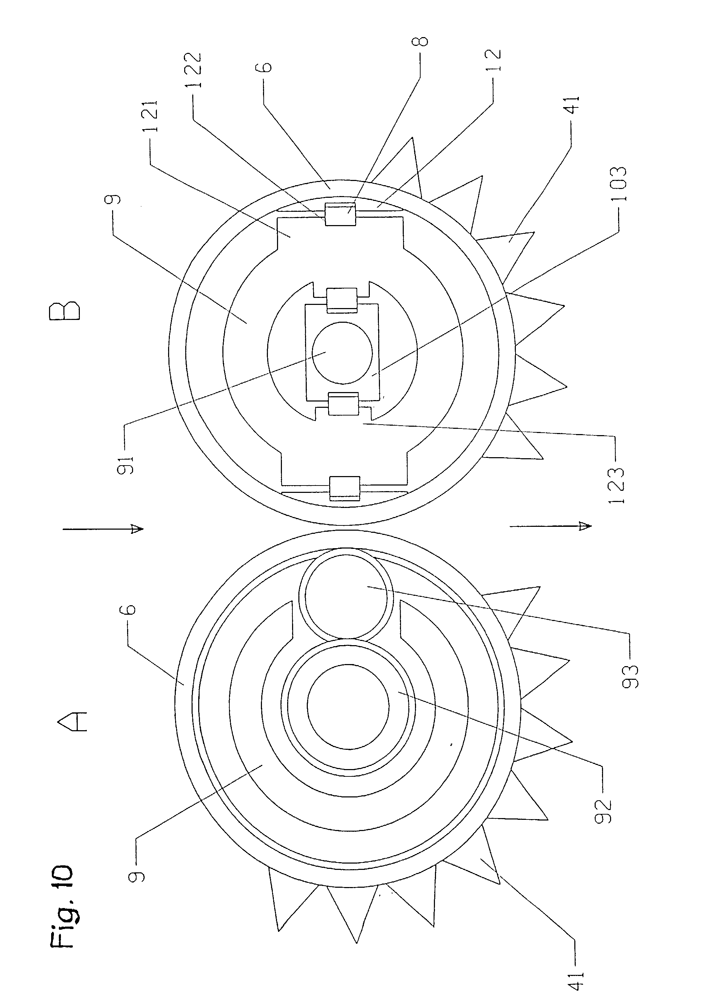

In the arrangement shown in Figs. 9 and 10, the roll is of the type described previously and shown in Fig. 6, except that in this arrangement there is no support member 10 for the shell deforming elements. Support for the shell deforming elements is provided directly by the static shaft 9 which has a recess 122 for the shell deforming element namely in two rows on either side of the shell drive means 92, 93. Roll A in this arrangement has a single epicyclic gear 93 coupling the drive shaft 91 to the shell 6. This drawing also shows external cooling spray means 41.

Instead of internal cooling of the shell or external spray cooling, the shell may be cooled by the hydraulic lubricant acting directly on the under side of the shell 6. Preferably this hydraulic fluid is the same as the fluid used to operate the pistons, though a separate coolant could also be used. A further alternative method of cooling is to use water boxes or hydro-pads which are fitted closely to the curved surface of the shell 6, either internally or externally.

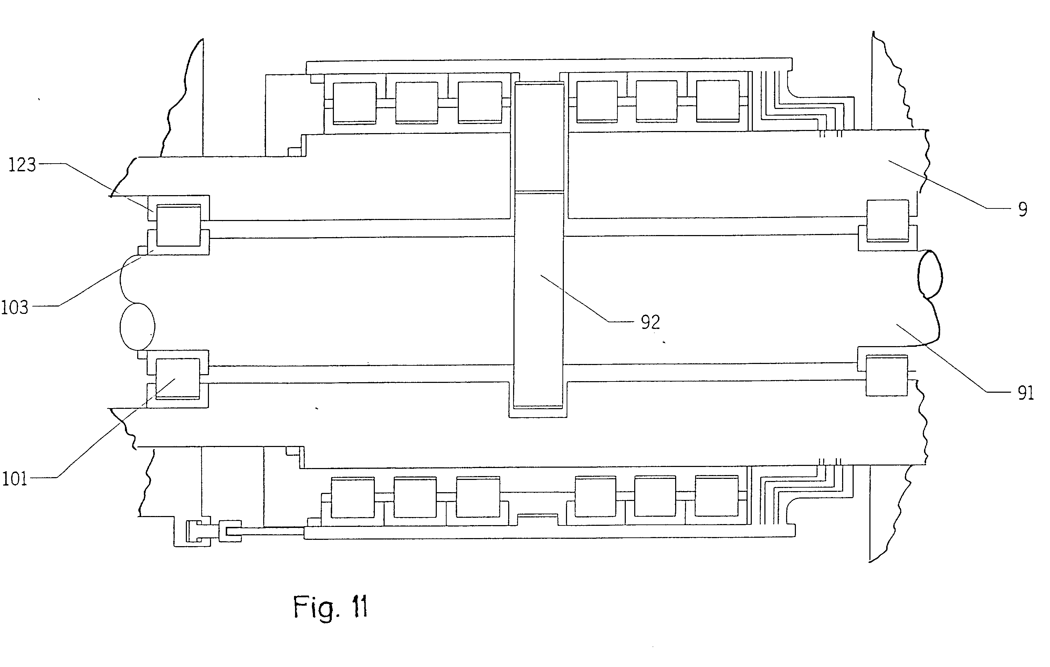

Roll B in Fig. 10 and shown in longitudinal section in Fig. 11 shows the piston arrangement 101 between the drive shaft 91 and the static shaft 9 for compensating for movement of the shell 6. In this roll the compensating pad 103 has been replaced by an integrally formed recess 123 formed on the internal wall of the hollow static shaft 9. In Fig. 11 however the roll comprises a separate shell deforming element support 10 as in previous rolls and a static shaft.

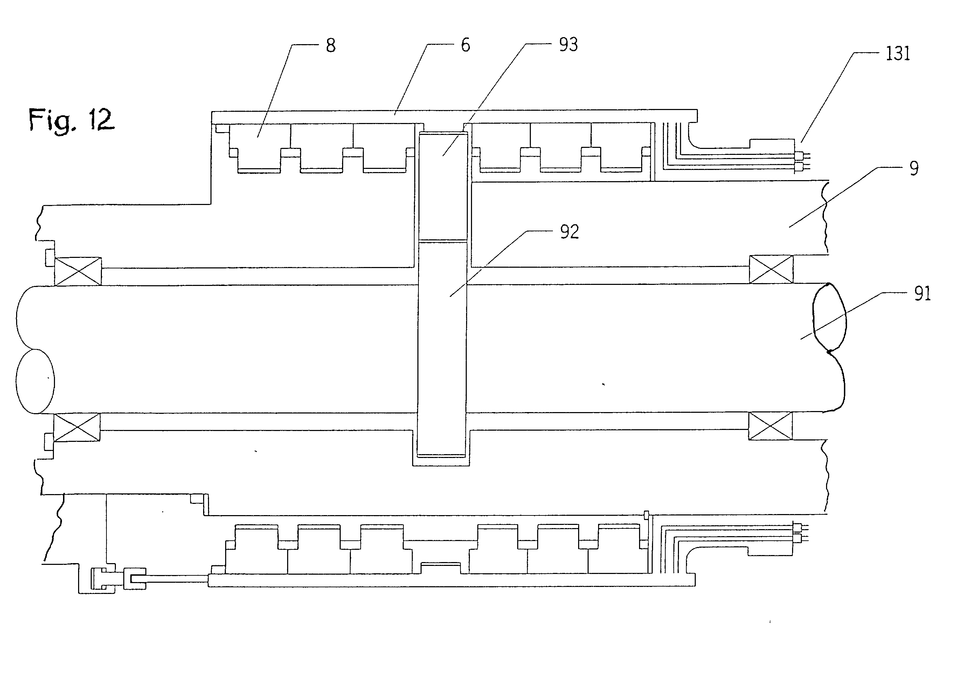

In Fig. 12 a further development of this arrangement is shown in longitudinal section with the shell deforming elements being formed with integral pads 8. The roll shown in Fig. 12 also comprises a static shaft, with the shell being driven the central drive shat 90. Fig. 12 also shows alternative coolant connection 131 for connecting the coolant to the shell directly from the roll stand rather than through the shaft 9. This allows for radial movement of the shell, providing a simpler sealing arrangement for the coolant.

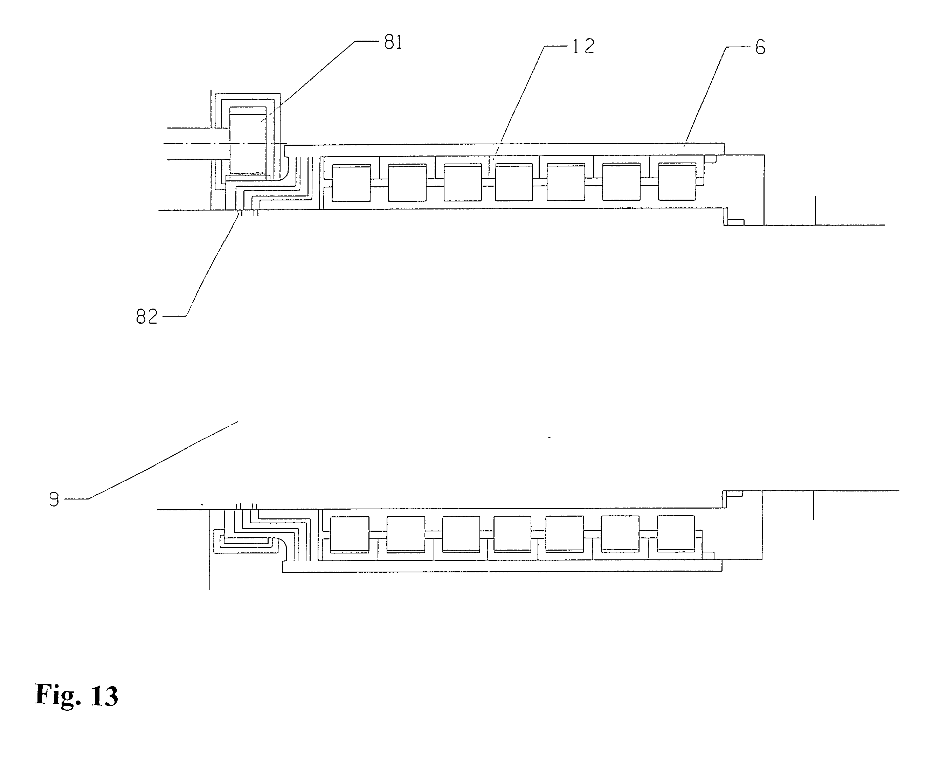

Fig. 13 shows separate drive means, in the form of a drive wheel 81, acting directly on to the external part of the shell 6. Coolant is provided internally of the shell (6) by means of cooling channels within the shell by means of the moving coolant connection 82 between the rotating shell 6 and the static shaft 9.

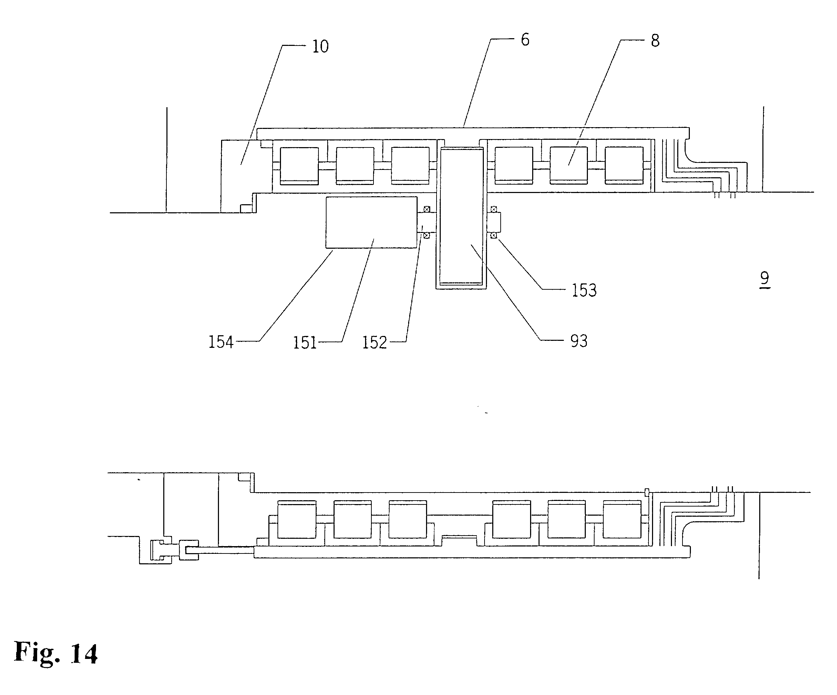

Fig. 14 shows separate drive means for the shell 6 provided by means of a gear 93 which drives the internal wall of the shell 6. The gear 93 is arranged within the static shaft 9 and is driven by a motor 151 located within a motor housing 154 in the static shaft 9. A drive shaft 152 and support bearings 153 are also provided.

Fig. 15 shows external drive means 66 as in Fig. 13 with end darns 141 to contain the molten metal being cast.

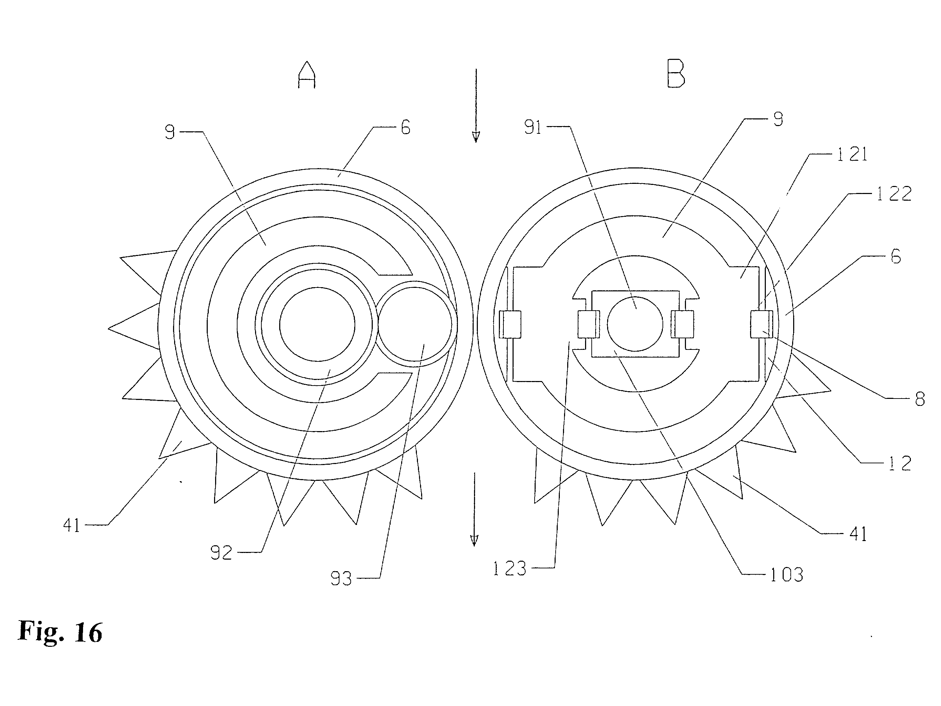

Fig. 16 is a cross sectional view of a pair of rolls according to a further embodiment of the invention with external cooling sprays 41 arranged externally around the perimeter of the rolls 1 and spraying coolant on the external surface of the shell. The cooling sprays are located in the region immediately beside the exit of the strip from the casting rolls and continue round the perimeter of the roll for as long as is necessary to provide the required cooling.

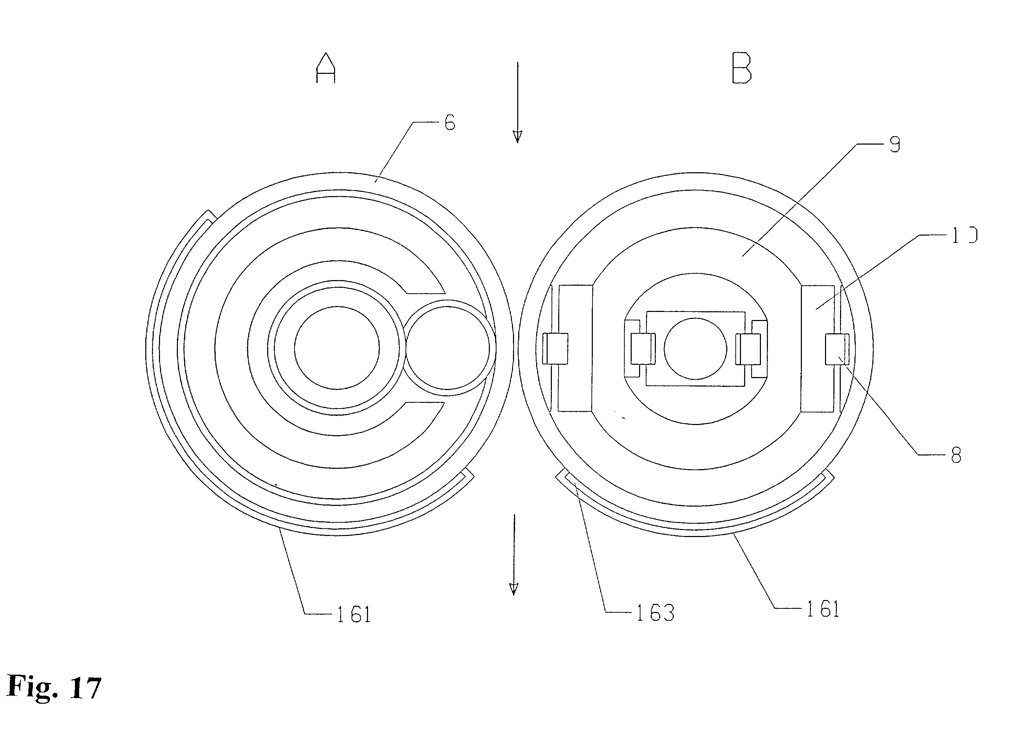

Fig. 17 is a cross sectional view of a pair of rolls according to a further embodiment of the invention with cooling pads 161 arranged around perimeter of the roll 1 and applying coolant 163 to the outside surface of the shell 6. The cooling pads 161 may be in the form of water or hydro pads or alternatively a non-water oil based lubricant.

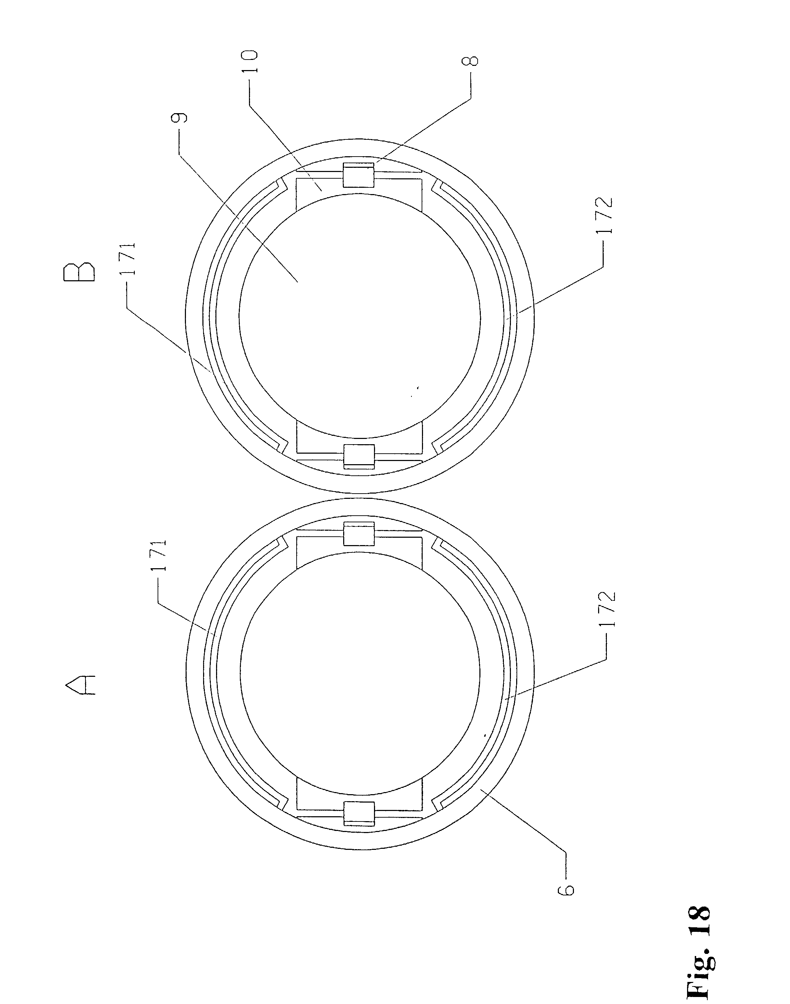

Fig. 18 a cross sectional view of a pair of rolls according to a further embodiment of the invention with cooling pads 171, 172 arranged around the inside perimeter of the roll 1 and applying coolant to the inside surface of the shell 6. The pads may be arranged at any convenient position in the roll and are not impeded by the metal being casts. In this embodiment two cooling pads 171, 172 are arranged opposite each other in the space between the shell deforming elements 8.

## Claims

1. A casting roll (1) comprising a shell (6) coupled to a drive shaft (91) and having a plurality of shaper units (8, 12) inside the shell, characterized in that the shaper units are mounted on a stationary support shaft (9) of large diameter.

2. A casting roll according to claim 1, characterized in that an axial bore (90) is provided therethrough, and in that a drive shaft passes through the bore in the support shaft and is coupled to the shell by epicyclic gearing (92, 93, 95).

3. A casting roll according to claim 1, characterized in that the shell is driven by external drive means (66, 81).

4. A casting roll according to claim 1, characterized in that the shell is driven by internal drive means including a drive source (151) located within the shaft (9).

5. A casting roll according to claim 1 characterized in that the shaper elements are arranged in two rows spaced 180° apart round the roll (top and bottom of Fig. 3).

6. A casting roll according to either previous claim characterized in that the drive shaft is coupled to the middle of the shell (Fig. 3), and the shaper units are arranged in half-rows.

7. A casting roll according to either of claims 1 and 2 characterized in that the shaper units are mounted in shaper unit support means (10) located between the shell and the support shaft and means (94) are provided for adjusting the axial position of the shaper elements along the roll..

8. A casting roll according to any previous claim, characterized in that the shell is cooled by internal cooling channels (13) in the shell by means of a moving cooling connection (82) to cooling channel provided within the shell (6).

9. A casting roll according to any previous claim, characterized by means (101-103) for adjusting the radial position of the drive shaft within the support shaft.

10. A casting roll according to any previous claim, characterized by compensation piston means (101) at each end of the roll (1) to enable axial adjustment of the shell (6).
